# FASCICULE DE BREVET EUROPEEN

(11) **EP 1 627 205 B1**
(45) Date de publication et mention de la délivrance du brevet: **25.06.2008**
(21) Numéro de dépôt: 04739195.8
(22) Date de dépôt: 13.05.2004
(51) Int. Cl.: G01C 21/36, G09B 29/00, G08G 1/0969

(54) **SYSTEME DE NAVIGATION EMBARQUE COMPORTANT UNE PREVISUALISATION D'ITINERAIRE AVEC INSTRUCTIONS DE GUIDAGE**
ONBOARD-NAVIGATIONSSYSTEM MIT ROUTENVORANSICHT UND LEITANWEISUNGEN
ON-BOARD NAVIGATION SYSTEM WITH A ROUTE PREVIEW AND GUIDING INSTRUCTIONS

(30) Priorité: 23.05.2003 FR 0306263
(43) Date de publication de la demande: 22.02.2006
(73) Titulaire: Siemens VDO Automotive S.A.S., 31036 Toulouse Cédex 01 (FR)
(72) Inventeur: DHOLLANDE, Emmanuel, F-06160 Juan Les Pins (FR)
(86) Numéro de dépôt international: PCT/EP2004/005138
(87) Numéro de publication internationale: WO 2004/104519

(56) Documents cités:
- EP-A- 0 508 822
- EP-A- 1 229 305
- US-A- 5 544 060
- US-A1- 2001 027 377

## Description

La présente invention est relative à un système de navigation embarqué, et plus particulièrement à un tel système comportant une prévisualisation de l'itinéraire prévu assortie des instructions de guidage correspondantes.

Les systèmes de navigation embarqués dans les véhicules automobiles comprennent généralement une base de données cartographiques, des moyens de calcul et des moyens d'affichage pour délivrer au conducteur des informations sur la route à suivre pour se rendre à une destination choisie à l'avance. Selon le système, deux types d'information sont ainsi fournies. Dans un premier cas, l'information fournie est une représentation cartographique de la zone parcourue, avec une mise en évidence de la route à suivre et un repère matérialisant le véhicule sur celle-ci. Une telle représentation est riche en informations, mais peut s'avérer complexe et difficile à lire, risquant de distraire le conducteur pendant la conduite. Dans un second cas, l'information délivrée est plus ergonomique, se limitant à afficher, sous forme de pictogrammes et/ou d'informations vocales, des instructions de guidage de type "tourner à droite", etc. Cette information, quoique pratique, ne permet pas au conducteur de se situer sur son itinéraire.

Certains systèmes, comme par exemple celui décrit dans le document DE 39 05 493, proposent de juxtaposer les deux modes de représentation, en affichant une carte sur un écran, et des informations de guidage sur un autre, par exemple par projection sur le pare-brise du véhicule. Si cette solution peut présenter un avantage pendant le déplacement, il n'en est pas de même lors de sa préparation, quand le conducteur, après avoir entré sa destination dans le système, veut visualiser l'itinéraire déterminé par le système pour le valider ou l'infirmer. Cette solution est en outre très coûteuse car elle nécessite en permanence deux écrans. D'autres systèmes, tels que celui décrit dans le document US 5,832,406 proposent au conducteur de prévisualiser sa route en affichant séquentiellement sur l'écran les différents croisements qu'il rencontrera, avec une indication de la route à suivre à chaque croisement. Ces systèmes présentent l'inconvénient de ne pas permettre une vue d'ensemble de l'itinéraire choisi.

Le document US 6,249,740 propose une prévisualisation d'itinéraire en affichant la route globale du point de départ à la destination de l'utilisateur.

La présente invention a donc pour but de proposer un système de navigation qui pallie les inconvénients de la technique antérieure en faisant le lien entre l'itinéraire déterminé par le système et les instructions de guidage que celui-ci délivrera au cours du déplacement.

On atteint ces buts de l'invention, ainsi que d'autres qui apparaîtront dans la suite de la présente description, au moyen d'un système de navigation embarqué, comportant des données cartographiques, des moyens d'entrée d'au moins une destination, des moyens de calcul d'un itinéraire entre un point d'origine et ladite destination, des moyens de détermination d'informations de guidage sur cet itinéraire, et des moyens d'affichage, **caractérisé en ce que** le système comprend un dispositif de prévisualisation dudit itinéraire affichant simultanément une représentation cartographique de l'itinéraire, et des informations de guidage, lesdites informations étant superposées sur la représentation cartographique en relation avec le point de l'itinéraire auquel elles seront applicables.

Suivant une **caractéristique** importante de la présente invention, l'itinéraire est constitué de tronçons de route hiérarchisés, et le dispositif de prévisualisation comporte des moyens de détermination d'une échelle d'affichage de la représentation cartographique et des moyens de sélection du niveau hiérarchique des tronçons de route à afficher en fonction de ladite échelle de représentation et des informations de guidage affichées en fonction du niveau hiérarchique desdits tronçons

Avantageusement, en cas de conflit d'affichage entre plusieurs informations de guidage, l'information de guidage relative au tronçon de plus haut niveau hiérarchique sera affichée en priorité.

Selon une autre **caractéristique** importante de l'invention, les informations de guidage sont affichées telles qu'elles seront présentées lors du parcours de l'itinéraire, et ce, quelque que soit l'orientation de la représentation cartographique.

D'autres **caractéristiques et** avantages du système suivant l'invention apparaîtront à la lecture de la description qui va suivre et à l'examen des dessins annexés dans lesquels :
- la figure 1 représente une vue schématique du système de navigation selon l'invention, et
- la figure 2 montre un exemple de représentation cartographique fournie par le dispositif de prévisualisation selon l'invention.

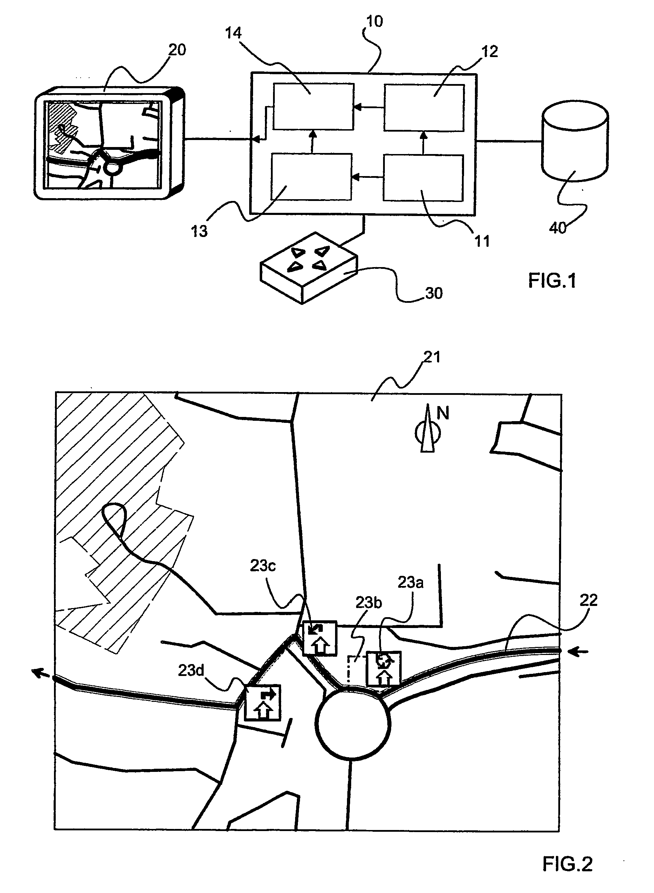

Le système de navigation représenté sur la figure 1 comporte classiquement un calculateur 10 relié à un écran 20 par exemple un écran plat à cristaux liquides, à des moyens d'entrée 30 de données et d'instructions, comme un clavier, et à des moyens de stockage 40 comprenant au moins des données cartographiques relatives à une région déterminée. Le calculateur 10 est constitué, sur un plan physique, par un microprocesseur associé à des circuits périphériques tels que mémoires, circuits d'entrées-sorties tels qu'une interface graphique, etc. qui ne sont pas représentés car connus en eux mêmes. Le calculateur 10 comprend en outre un logiciel lui permettant de remplir de nombreuses fonctions, dont seules les fonctions utiles pour l'exposé ont été représentées sous la forme des blocs fonctionnels 11 à 14. Le calculateur 10 comprend donc des moyens de calcul d'itinéraire 11, qui, à partir d'un point d'origine, en général la position présente du véhicule, et d'une destination, soit entrée directement par les moyens d'entrée 30 soit sélectionnée dans un carnet d'adresse, calcule un itinéraire en sélectionnant des tronçons de route contigus dans les données cartographiques contenues dans les moyens de stockage 40. Ces différents tronçons de route n'ont pas tous la même importance, par exemple en fonction de la nature de la voie. En effet, lorsque l'itinéraire couvre un déplacement d'une adresse dans une première ville vers une autre adresse dans une autre ville, il pourra comprendre des rues de la première ville pour arriver à des boulevards, puis des routes nationales à la sortie de celle-ci, des autoroutes reliant les deux villes, puis, à proximité de la ville de destination, des routes nationales, des boulevards et des rues pour arriver à l'adresse exacte de destination. En fonction de la partie de l'itinéraire observé, on s'intéressera à un niveau de détail plus ou moins important, ainsi seules les routes à grande circulation et les autoroutes peuvent présenter de l'intérêt lorsqu'on observe l'itinéraire global, par contre les petites rues présenteront de l'importance si l'on observe simplement la partie de l'itinéraire correspondant au déplacement à l'intérieur de l'une des villes d'origine ou de destination. De ce fait l'itinéraire calculé par les moyens de calcul 11 comprend non seulement la liste des tronçons de route considérés, mais également une information quant à leur hiérarchie.

Cet itinéraire est ensuite transmis à des moyens de représentation cartographique 12, adaptés à préparer une représentation de cet itinéraire sur une carte routière en vue de son affichage sous cette forme sur l'écran 20. L'itinéraire est ainsi mis en évidence sur un fond de carte par un tracé d'épaisseur et / ou de couleur différent du tracé des autres routes représentées. La figure 2 montre un exemple d'une représentation cartographique 21 sur laquelle l'itinéraire 22 a été représenté en trait plus épais que les autres routes.

L'itinéraire défini par les moyens de calcul 11 est également transmis à des moyens 13 de détermination d'instructions de guidage, dont la fonction est de déterminer pour chaque raccordement de deux tronçons de route contigus quelles sont les instructions qui seront délivrées au conducteur au fur et à mesure de son parcours pour lui permettre d'effectuer la manoeuvre nécessaire au suivi de l'itinéraire calculé. Ces instructions de guidage peuvent être présentées sous la forme de pictogrammes 23 symbolisant l'action à entreprendre et/ou sous la forme de messages vocaux. Ces instructions de guidages sont alors annexées au tronçon de route pendant lequel elles devront être délivrées au conducteur pour lui permettre d'emprunter le tronçon suivant.

Selon la caractéristique essentielle de l'invention, les moyens de représentation cartographique 12 et de détermination d'instruction de guidage 13 délivrent les informations qu'ils ont élaborées à un dispositif de prévisualisation 14. Ce dernier utilise ces informations pour former, sur demande du conducteur, un affichage combiné (voir figure 2) constitué d'une représentation cartographique 21 de l'itinéraire et des informations de guidage 23 qui seront présentées le long du parcours, ces informations, en forme de pictogrammes 23a, 23c, 23d, étant placées sur la carte approximativement à l'endroit où le véhicule se trouvera lorsque le système de navigation les délivrera lors du déplacement.

Ainsi, dès que l'itinéraire a été déterminé, celui-ci peut être affiché sous la forme d'une carte assortie de pictogrammes de guidage. Cet affichage peut être effectué automatiquement, ou sur requête du conducteur au moyen d'une sélection dans un menu, pilotée par les moyens d'entrée 30. Par défaut, cet affichage s'effectue à une échelle compatible avec l'itinéraire déterminé, permettant de montrer l'ensemble de celui-ci. On comprend qu'alors seules les informations de plus haut niveau hiérarchique sont affichées afin de ne pas surcharger cette représentation. Ainsi, par exemple lors d'un itinéraire reliant deux villes, ne montrera-t-on que les routes et autoroutes reliant celles-ci, sans entrer dans le détail des rues des villes. Conformément à l'invention, le dispositif de prévisualisation 14 sélectionnera, en fonction de cette échelle, le niveau hiérarchique des tronçons de route à afficher et les informations de guidage 23 associées à ceux-ci. Le conducteur conserve néanmoins la possibilité de sélectionner une partie de la représentation affichée et de faire un zoom sur celle-ci. Le dispositif de prévisualisation 14 détermine, en fonction de la partie sélectionnée, une échelle appropriée pour la représentation cartographique, et en fonction de celle-ci, le niveau hiérarchique des tronçons de route à afficher, ainsi que les informations de guidage qui y sont associées.

On a représenté à la figure 2 une représentation cartographique 21 correspondant à une échelle intermédiaire, orientée vers le nord, dans laquelle l'itinéraire 22 représenté en trait plus épais est parcouru de la droite de la figure vers la gauche de celle-ci, ainsi que le suggèrent les flèches (qui ne sont représentées qu'à titre d'information pour aider à la lisibilité de la figure) à l'entrée et à la sortie de l'itinéraire.

On remarque qu'à l'issue du premier tronçon de route, un pictogramme 23a est affiché en relation avec ce tronçon, informant le conducteur qu'il va déboucher sur un rond-point. Un second tronçon correspond à l'arc parcouru sur ce rond-point. Une information de guidage devrait être affichée en relation avec ce tronçon. Cependant, selon une caractéristique de l'invention, le dispositif de prévisualisation 14 détecte que le pictogramme 23b correspondant, représenté en traits interrompus sur la figure, entre en conflit d'affichage avec le pictogramme 23a, ces deux pictogrammes se recouvrant partiellement. Le dispositif de prévisualisation 14 compare alors le niveau hiérarchique des tronçons respectifs, et en présence, dans l'exemple représenté, d'un niveau du premier tronçon supérieur à celui du second, élimine la représentation du pictogramme 23b pour ne pas surcharger la représentation cartographique. Il aurait été également possible de représenter le pictogramme 23a en premier plan, recouvrant en partie le pictogramme 23b, en raison de la priorité supérieure du premier sur le second.

En poursuivant le long de l'itinéraire 22, on rencontre un pictogramme 23c indiquant de tourner à gauche à l'issue du troisième tronçon, et un pictogramme 23d indiquant de tourner à droite à l'issue du quatrième tronçon. On constate alors que, selon une caractéristique de l'invention, ce dernier pictogramme est affiché tel qu'il sera présenté lors du parcours de l'itinéraire. En effet, le quatrième tronçon est parcouru dans le sens nord-sud, donc, quoique à première vue le tronçon suivant semble être orienté vers la gauche, il faudra en réalité tourner à droite pour s'y engager. On remarque ainsi un avantage de la représentation selon l'invention, qui permet, sans avoir à opérer la gymnastique mentale consistant à réorienter la carte dans le sens du parcours, de percevoir immédiatement la manoeuvre qu'il conviendra de faire à cet endroit.

Le système de navigation embarqué décrit ci-avant permet donc à l'utilisateur de visualiser, dès sa détermination, l'ensemble de l'itinéraire qu'il aura à parcourir, avec une possibilité de visualisation plus détaillée au moyen d'un zoom, tout en le familiarisant avec les instructions de guidage qui lui seront délivrées par le système le long de ce parcours.

## Revendications

1. Système de navigation (1) embarqué, comportant des données cartographiques (40), des moyens d'entrée (30) d'au moins une destination, des moyens de calcul d'un itinéraire (11) entre un point d'origine et ladite destination, des moyens de détermination d'informations de guidage (13) sur cet itinéraire, et des moyens d'affichage (20), **caractérisé en ce que** le système comprend un dispositif de prévisualisation (14) dudit itinéraire affichant simultanément une représentation cartographique (21) de l'itinéraire, et des informations de guidage (23), lesdites informations étant superposées sur la représentation cartographique en relation avec le point de l'itinéraire auquel elles seront applicables.

2. Système de navigation selon la revendication 1, **caractérisé en ce que** l'itinéraire (22) est constitué de tronçons de route hiérarchisés, et **en ce que** le dispositif de prévisualisation (14) comporte des moyens de détermination d'une échelle d'affichage de la représentation cartographique et des moyens de sélection
- du niveau hiérarchique des tronçons de route à afficher en fonction de ladite échelle de représentation et,
- des informations de guidage affichées en fonction du niveau hiérarchique desdits tronçons

3. Système de navigation selon la revendication 2, **caractérisé en ce que**, en cas de conflit d'affichage entre plusieurs informations de guidage (23a, 23b), l'information de guidage relative au tronçon de plus haut niveau hiérarchique sera affichée en priorité.

4. Système de navigation selon l'une des revendications précédentes, **caractérisé en ce que** les informations de guidage sont affichées telles qu'elles seront présentées lors du parcours de l'itinéraire, quelque que soit l'orientation de la représentation cartographique.

## Claims

1. Onboard navigation system (1), comprising cartographic data (40), means of input (30) of at least one destination, means of calculation of a route (11) between an origin point and said destination, means of determination of guidance information (13) on this route, and means of display (20), **characterised in that** the system comprises a device for previewing (14) said route simultaneously displaying a cartographic representation (21) of the route, and guidance information (23), said information being superimposed on the cartographic representation in relation to the point of the route to which it will be applicable.

2. Navigation system according to claim 1, **characterised in that** the route (22) is made up of hierarchised stretches of road, and **in that** the previewing device (14) comprises means of determination of a scale of display of the cartographic representation and means of selection
- of the hierarchical level of the stretches of road to be displayed as a function of said scale of representation, and
- of the guidance information displayed as a function of the hierarchical level of said stretches.

3. Navigation system according to claim 2, **characterised in that,** in case of conflict of display between several items of guidance information (23a, 23b), the guidance information item relating to the stretch of highest hierarchical level will be displayed by priority.

4. Navigation system according to one of the preceding claims, **characterised in that** the guidance information is displayed such as it will be presented while travelling the route, whatever the orientation of the cartographic representation.

## Patentansprüche

1. Onboard-Navigationssystem (1), das kartographische Daten (40), Eingabemittel (30) mindestens eines Ziels, Berechnungsmittel einer Route (11) zwischen einem Ausgangspunkt und dem Ziel, Bestimmungsmittel (13) für Leitinformationen auf dieser Route und Anzeigemittel (20) umfasst, **dadurch gekennzeichnet, dass** das System eine Routenvoransichtsvorrichtung (14) umfasst, die gleichzeitig eine kartographische Darstellung (21) der Route und Leitinformationen (23) anzeigt, wobei die Informationen in Verbindung mit dem Routenpunkt, auf den sie anwendbar sein werden, über der kartographischen Darstellung liegen.

2. Navigationssystem nach Anspruch 1, **dadurch gekennzeichnet, dass** die Route (22) hierarchisierte Straßenabschnitte umfasst, und dass die Voransichtsvorrichtung (14) Bestimmungsmittel eines Anzeigemaßstabs der kartographischen Darstellung und Auswahlmittel
- der Hierarchieebene der Straßenabschnitte, die entsprechend dem Darstellungsmaßstab anzuzeigen sind, und
- der Leitinformationen, die entsprechend der Hierarchieebene der Abschnitte angezeigt werden,
umfasst.

3. Navigationssystem nach Anspruch 2, **dadurch gekennzeichnet, dass** im Falle eines Anzeigekonflikts zwischen mehreren Leitinformationen (23a, 23b), die Leitinformation in Verbindung mit dem Abschnitt mit der höchsten Hierarchieebene vorrangig angezeigt wird.

4. Navigationssystem nach einem der vorhergehenden Ansprüche, **dadurch gekennzeichnet, dass** die Leitinformationen so angezeigt werden, wie sie beim Durchfahren der Route dargestellt sein werden, unabhängig von der Ausrichtung der kartographischen Darstellung.
